(19) Europäisches Patentamt

European Patent Office

Office européen des brevets

(11) **EP 1 528 047 A2**

(12) **EUROPÄISCHE PATENTANMELDUNG**

(43) Veröffentlichungstag:
**04.05.2005 Patentblatt 2005/18**

(51) Int Cl.⁷: **C04B 28/12**, C04B 24/00,
C04B 22/06

(21) Anmeldenummer: **04024314.9**

(22) Anmeldetag: **12.10.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **03.11.2003 DE 10351235**

(71) Anmelder: **Solubel Vertriebs GmbH,
Historische - Luftkalkputze
91207 Lauf (DE)**

(72) Erfinder: **Ruf, Klaus
91207 Lauf-Neunhof (DE)**

(74) Vertreter: **Grünecker, Kinkeldey,
Stockmair & Schwanhäusser Anwaltssozietät
Maximilianstrasse 58
80538 München (DE)**

(54) **Trockenmischung für einen Luftkalkputz**

(57) Es wird eine Trockenmischung für einen Luftkalkputz beschrieben, der eine erhöhte Frostbeständigkeit und Härte aufweist. Zu diesem Zweck enthält eine Grundmischung aus Luftkalk, insbesondere Kalkhydrat, und Sand einen Gehalt an Hüttensandmehl.

EP 1 528 047 A2

**Beschreibung**

Die Erfindung bezieht sich auf eine Trockenmischung für einen Luftkalkputz.

Luftkalkputze, d.h. Putze, die unter Verwendung von durch das Kohlendioxyd der Luft aushärtenden Kalkmaterialien hergestellt wurden, sind seit undenklichen Zeiten im Einsatz und weisen gute bauphysikalische Eigenschaften auf. Unverzichtbar sind sie als Sanierputze für die Restaurierung historischer Baudenkmäler. Sie sind jedoch wegen ihrer Porosität relativ wenig wasserbeständig und demzufolge in durchnässtem Zustand wenig frostsicher.

Der Erfindung liegt die Aufgabe zugrunde, die Frostsicherheit eines Luftkalkputzes zu verbessern.

Diese Aufgabe wird durch die im Anspruch 1 angegebenen Merkmale gelöst.

Es hat sich herausgestellt, dass durch die Zugabe von Hüttensandmehl einerseits eine erhöhte Frostsicherheit des Luftkalkputzes erzielt werden kann, ohne seine anderen Eigenschaften, und insbesondere seine Eignung als Sanierputz für die Restaurierung historischer Baudenkmäler zu beeinträchtigen. Weiterhin wurde eine merkliche Härtezunahme des Putzes erzielt.

Die Zugabe von Hüttensandmehl führt zu einer technisch besonders relevanten Zunahme der Frostsicherheit und der Härtegrade in Verbindung mit der Zugabe eines Zusatzmittels, dessen Zusammensetzung durch die DE 41 27 684 C1 geschützt ist, deren Offenbarung hiermit durch Bezugnahme eingeschlossen wird.

Vorteilhafte Weiterbildungen der Erfindung sind den anderen Unteransprüchen zu entnehmen.

Ein Ausführungsbeispiel der Erfindung wird nachfolgend erläutert.

Die Erfindung betrifft eine Trockenmischung für einen Luftkalkputz, die bevorzugt fertig gemischt in den Handel gebracht wird, so dass der Benutzer lediglich die Trockenmischung mit Wasser anteigen muss. Die Trockenmischung eignet sich jedoch auch für eine Mischung aller Bestandteile durch den Benutzer selbst.

Die Trockenmischung enthält die übliche Grundmischung für einen Luftkalkputz, die. aus einem (Gewichts-) Anteil Luftkalk, bevorzugt als Kalkhydrat, und zwei bis vier, bevorzugt drei (Gewichts-)Anteilen des üblicherweise für einen Putz verwendeten Sandes mit einer Korngröße bis zu 2 mm (Sieblinie 0 bis 2) besteht. Dieser Grundmischung wird ein Zusatzmittel in einer Menge hinzugefügt, dass der Gehalt an Zusatzmittel in 1000 g der fertigen Trockenmischung zwischen 1 bis 5 g, bevorzugt 1 g, beträgt.

Das Zusatzmittel enthält die folgenden Bestandteile:

| | |
|---|---|
| 15 - 40 Gew. % | Stärkezucker |
| 5 - 15 Gew.% | Naphthalin/Melamin/Formaldehyd-Kondensationsprodukte |
| 10 - 40 Gew. % | Casein |
| 10 - 30 Gew.% | Dextrin |
| 3 - 10 Gew.% | Fruchtsäure |
| 5 - 15 Gew.% | Luftporen-Stabilisator |
| 5 - 25 Gew.% | Borsäure oder Borax |
| 5 - 20 Gew.% | Soda und/oder Natron. |

Das Zusatzmittel hat bevorzugt die folgende Zusammensetzung:

| | |
|---|---|
| 20 - 30 Gew.% | Stärkezucker |
| 8 - 12 Gew.% | Naphthalin/Melamin/Formaldehyd-Kondensationsprodukte |
| 10 - 20 Gew. % | Casein |
| 10 - 20 Gew.% | Dextrin |
| 3 - 6 Gew.% | Fruchtsäure |
| 5 - 7 Gew.% | Luftporen-Stabilisator |
| 10 - 20 Gew.% | Borsäure oder Borax |
| 7 - 15 Gew.% | Soda und/oder Natron. |

Ein Zusatzmittel, das sich im praktischen Versuch besonders gut bewährt hat, hat die folgende Zusammensetzung:

| | | |
|---|---|---|
| etwa | 25 Gew.% | Stärkezucker |
| etwa | 10 Gew.% | Naphthalin/Melamin/Formal- |

(fortgesetzt)

|  |  | dehyd-Kondensationsprodukte |
|---|---|---|
| etwa | 15 Gew.% | Casein |
| etwa | 15 Gew.% | Dextrin |
| etwa | 4 Gew.% | Fruchtsäure |
| etwa | 6 Gew.% | Luftporen-Stabilisator |
| etwa | 14 Gew.% | Borsäure oder Borax |
| etwa | 11 Gew.% | Soda und/oder Natron. |

Zusätzlich kann das Zusatzmittel in allen Rezepturen etwa 1 Gew.% Zinkstearat enthalten, das die Wasseraufnahmefähigkeit herabsetzt und somit die Haltbarkeit im Vorrat verbessert.

Alle Bestandteile sind handelsüblich.

Der Stärkezucker wird bevorzugt als reine Glucose eingesetzt.

Die Naphthalin/Melamin/Formaldeyhd-Kondensationsprodukte gelangen beispielsweise durch Zugabe handelsüblicher Stoffe zum Zusatzmittel, wie beispielsweise das unter dem Namen "Tillmann O.F. T.3" erhältliche niederländische Mittel auf Naphthalinbasis, das unter dem Namen "Melmet 10" oder Melmet F300" erhältliche Mittel auf Melanin-Formaldehydbasis, oder das unter dem Namen "Disper-SOGEEN IA" erhältliche Mittel auf Naphthalin- oder Formaldehydbasis.

Dextrin wird bevorzugt als Maisdextrin eingesetzt. Ein Dextrin auf Kartoffelbasis kann jedoch auch verwendet werden.

Als Fruchtsäure wird bevorzugt Weinsäure eingesetzt. Zitronensäure ist jedoch ebenfalls brauchbar.

Als Stabilisator für die Luftporen wird der auch bislang für Putze eingesetzte Luftporen-Stabilisator verwendet.

Bevorzugt wird Borsäure verwendet, die Verwendung von Borax ist jedoch auch möglich.

Das Soda kann in allen vorstehenden Rezepturen ganz oder teilweise durch Natron ersetzt werden.

Weiterhin wird so viel Hüttensandmehl hinzugefügt, dass der Gehalt an Hüttensandmehl in 1000 g der fertigen Trockenmischung weniger als 100 g, insbesondere bis zu 70 g, bevorzugt 10 g bis 50 g, beträgt. Dabei sind bevorzugt der Anteil an Sand mit der kleinste Korngröße in der Grundmischung um die gleiche Menge reduziert, d.h. Mehlanteile im Sand werden durch das Hüttensandmehl ersetzt.

Hüttensandmehl wird aus dem Abfallprodukt Hochofenschlacke hergestellt und liegt zunächst in Granulatform vor. Für den erfindungsgemäßen Einsatzzweck muss dieser Hüttensand zu Mehl fein ausgemahlen werden, da festgestellt wurde, dass durch dieses feine Ausmahlen die reaktionsfähigen Ionen bereits beim Anmischvorgang in Wasser freigesetzt werden und reagieren können, so dass die Reaktionen nicht später im Putz stattfinden, was zu gravierenden Putzschäden führen würde. Diese gravierenden Putzschäden durch Zusatz von granulatförmigem Hüttensand sind wahrscheinlich auch der Grund dafür, dass man bislang die Zugabe von granulatförmigem Hüttensand zu Kalkputz als äußerst nachteilig angesehen hat.

Hüttensandmehl ist im Handel erhältlich. Das für den vorliegenden Einsatzzweck bevorzugte Hüttensandmehl sollte eine Feinheit aufweisen, die einer spezifischen Oberfläche nach Blaine von 3400 bis 4400 cm$^2$/g, insbesondere von 3500 bis 4300 cm$^2$/g und bevorzugt von 3980 cm$^2$/g entspricht.

Die spezifische Oberfläche nach Blaine wird nach einem üblichen Messverfahren aus dem Widerstand errechnet, das ein definiertes Schüttbett gegen durchströmende Luft bietet.

Die bevorzugte Korngrößenverteilung sollte einem Lageparameter d' von 18 bis 20 µm bevorzugt von 19µm entsprechen.

Die Korngrößenverteilung wird in üblicher Weise mit Hilfe der Lasergranulometrie durch Laserbeugung ermittelt.

Die chemische Analyse des bevorzugt verwendeten Hüttensandmehls weist die folgenden Werte auf:

1. Chemische Analyse

| 1.1 Chemische Zusammensetzung |  | Mittelwert |
|---|---|---|
| CaO | [M.-%] | 39,9 |
| MgO | [M.-%] | 8,8 |
| Al$_2$O$_3$ | [M.-%] | 11,5 |
| SiO$_2$ | [M.-%] | 35,4 |
| S | [M.-%] | 1,1 |

(fortgesetzt)

| 1.1 Chemische Zusammensetzung | | Mittelwert |
|---|---|---|
| MnO | [M.-%] | 0,2 |
| FeO | [M.-%] | 0,5 |
| $TiO_2$ | [M.-%] | 1,8 |
| $Na_2O$ | [M.-%] | 0,3 |
| $K_2O$ | [M.-%] | 0,4 |
| **1.2 Basizitäts - Kennziffern** | | |
| $CaO/SiO_2$ | | 1,13 |
| $(CaO + MgO + Al_2O_3) / SiO_2$ | | 1,70 |
| $(CaO + MgO) / SiO_2$ | n.EN 197 | 1,38 |
| $\dfrac{CaO + 0{,}5MgO + Al_2O_3 + 0{,}5S}{SiO_2 + MnO}$ | F-Wert<br>n. Keil | 1,58 |

Das bevorzugt verwendete Hüttensandmehl hat eine Helligkeit mit einem Reflexionswert von 63, der jedoch um diesen Wert schwanken kann (100 = weiß).

Zum Überprüfen der Frostbeständigkeit wurde eine Frost-Tau-Wechsel-Prüfung vorgenommen und die Festigkeiten vor und nach der Prüfung ermittelt. Die Prüfung wurde an einer Oberputz-Luftkalkputz-Probe durchgeführt, die hergestellt wurde aus der erfindungsgemäßen Trockenmischung mit Sand, Korn 0 bis 2 mm und der oben beschriebenen Zugabe von 50 g Hüttensandmehl und 1 g Zusatzmittel.

Die Proben in Form von Mörtelprismen wurden zunächst in Normklima bei 20°C und 65 % r. F. gelagert, um eine ausreichende Carbonatisierung zu gewährleisten.

Zehn Wochen nach dem Herstellungstermin wurde von jedem Probenprisma ein Würfel der Kantenlänge 4 x 4 x 4 cm abgetrennt und danach Zugfestigkeitsprüfungen in Anlehnung an EN 196 durchgeführt.

An dem verfügbaren Rest der Proben wurden Frost-Tau-Wechselversuche mit folgendem Versuchsablauf durchgeführt:

1. eine Stunde Saugen auf wassergetränktem Vlies und anschließendem Messen der Wasseraufnahme durch Differenzwägung
2. 16 Stunden Lagerung bei -15°C
3. 7 Stunden Auftauen im Normklima (20°C, 65 %r.F.)

Dieser Zyklus wurde insgesamt 50 mal wiederholt und anschließend die Proben bis zur Gewichtstoleranz getrocknet. Ein Vergleich der Trockengewichte vor und nach der Frostprüfung ergibt die folgenden Werte.

| | |
|---|---|
| Trockengewicht [g] vor der Frostprüfung | 190,3 |
| Trockengewicht [g] nach der Frostprüfung | 190,7 |

Es war im Rahmen der Messgenauigkeit keine Gewichtsveränderung nach 50 Frostzyklen festzustellen

Die Wasseraufnahme ist während des gesamten Versuchszeitraums nahezu konstant geblieben. Der Anfangswert vor dem ersten Frostzyklus ist naturgemäß höher (12,1 Gew.%), da die Proben noch vollkommen trocken waren. Nach einem Frostwechsel reichen die gewählten 7 Stunden Trockenzeit nicht aus, um den Porenraum entsprechend zu trocknen.

Nach den Frostversuchen waren rein makroskopisch keine Veränderungen an den Probenkörpern festzustellen.

Zum Abschluss wurde von den endgetrockneten Probenkörpern aus dem Frostversuch wieder ein Würfel der Kantenlänge 4 x 4 x 4 cm abgetrennt und daran Druckfestigkeitsprüfungen durchgeführt. Eine Zusammenstellung der Druckfestigkeiten der untersuchten Prismen ergibt:

| | Dichte p [g/cm$^3$] | Maximalkraft $F_{max.}$ [N] | Druckfestigkeit $R_f$ [N/mm$^2$] |
|---|---|---|---|
| **vor** Frost | 1,74 | 2.600 | **1,56** |
| **nach** Frost | 1,72 | 9.200 | **5,46** |

Zusammenfassend ist zu sagen, dass die Untersuchungen der Proben eine sehr gute Frostbeständigkeit ergeben haben. Im Verlaufe der 50 Frostzyklen haben sich keine Änderungen der Wasseraufnahme eingestellt, so dass davon ausgegangen werden kann, dass keine Veränderung des Mörtelgefüges hinsichtlich des Porenraums durch den Frosteinfluss stattgefunden hat.

Der Vergleich der Druckfestigkeiten zeigt, dass sich nach der Frostprüfung in beiden Proben eine um den Faktor 3,5 höhere Druckfestigkeit eingestellt hat. Das ist nur mit einer Nachverfestigung des in den Proben verwendeten Hüttensandmehls zu erklären.

In Abwandlung des beschriebenen Ausführungsbeispiels können Sandanteile in der Grundmischung verändert werden. Statt Kalkhydrat kann ein anderer geeigneter Luftkalk verwendet werden.

**Patentansprüche**

1. Trockenmischung für einen Luftkalkputz, mit einer Grundmischung aus Luftkalk, insbesondere Kalkhydrat, und Sand und einem Gehalt an Hüttensandmehl.

2. Trockenmischung nach Anspruch 1, **dadurch gekennzeichnet, dass** der Gehalt an Hüttensandmehl weniger als 100g, insbesondere bis zu 70g, bevorzugt 10g bis 50g pro 1000g der Trockenmischung beträgt.

3. Trockenmischung nach Anspruch 1 oder 2, **gekennzeichnet durch** einen Gehalt an einem Zusatzmittel mit der folgenden Zusammensetzung:

| | |
|---|---|
| 15 - 40 Gew.% | Stärkezucker |
| 5 - 15 Gew.% | Naphthalin/Melamin/Formaldehyd-Kondensationsprodukte |
| 10 - 40 Gew.% | Casein |
| 10 - 30 Gew.% | Dextrin |
| 3 - 10 Gew.% | Fruchtsäure |
| 5 - 15 Gew.% | Luftporen-Stabilisator |
| 5 - 25 Gew.% | Borsäure oder Borax |
| 5 - 20 Gew.% | Soda und/oder Natron. |

4. Trockenmischung nach Anspruch 3, **dadurch gekennzeichnet, dass** der Gehalt an Zusatzmittel bis zu 5g, insbesondere 1 bis 5g, bevorzugt 1 g, pro 1000g der Trockenmischung beträgt.

5. Trockenmischung nach einem der Ansprüche 1 bis 4, **dadurch gekennzeichnet, dass** das Hüttensandmehl eine Feinheit aufweist, die einer spezifischen Oberfläche nach Blaine von 3400 bis 4400 cm$^2$/g, insbesondere 3500 bis 4300 cm$^2$/g, bevorzugt 3980 cm$^2$/g entspricht.

6. Trockenmischung nach einem der Ansprüche 1 bis 5, **dadurch gekennzeichnet, dass** das Hüttensandmehl eine Korngrößenverteilung aufweist, die einem Lageparameter d' von 18 bis 20 $\mu$m, bevorzugt 19 $\mu$m entspricht.

7. Trockenmischung nach einem der Ansprüche 1 bis 6, **gekennzeichnet durch** eine Grundmischung aus einem (Gewichts-)Anteil Kalkhydrat und zwei bis vier, bevorzugt drei (Gewichts-)Anteilen Sand, einem Gehalt von 1 bis 5g Zusatzmittel pro 1000g Trockenmischung mit der folgenden Zusammensetzung:

| | |
|---|---|
| 15 - 40 Gew.% | Stärkezucker |
| 5 - 15 Gew.% | Naphthalin/Melamin/Formaldehyd-Kondensationsprodukte |
| 10 - 40 Gew.% | Casein |
| 10 - 30 Gew.% | Dextrin |
| 3 - 10 Gew.% | Fruchtsäure |
| 5 - 15 Gew.% | Luftporen-Stabilisator |
| 5 - 25 Gew.% | Borsäure oder Borax |
| 5 - 20 Gew.% | Soda und/oder Natron, |

und einem Gehalt von bis zu 70g Hüttensandmehl pro 1000g Trockenmischung.